Europäisches Patentamt

European Patent Office

Office européen des brevets

(19)

(11) Numéro de publication: **0 335 051**
**A2**

(12) **DEMANDE DE BREVET EUROPEEN**

(21) Numéro de dépôt: 88402397.9

(22) Date de dépôt: 23.09.88

(51) Int. Cl.⁴: **F02P 7/02 , F02P 7/08 , H01R 39/60 , H02G 3/08 , H01R 9/24 , H01R 43/24 , H02G 3/06**

(30) Priorité: 23.03.88 FR 8803817

(43) Date de publication de la demande:
04.10.89 Bulletin 89/40

(84) Etats contractants désignés:
**DE FR IT SE**

(71) Demandeur: **EQUIPEMENTS AUTOMOBILES MARCHAL**
**21-27 boulevard Gambetta**
**F-92130 Issy les Moulineaux(FR)**

(72) Inventeur: **Heritier-Best, Pierre**
**Orbeil**
**F-63500 Issoire(FR)**
Inventeur: **Trigon, Jean-Claude**
**195, rue du Montchatel**
**F-01120 Dagneux(FR)**

(74) Mandataire: **Gamonal, Didier**
**Société VALEO Service Propriété**
**Industrielle 30, rue Blanqui**
**F-93406 Saint Ouen(FR)**

(54) **Tête amovible de distributeur d'allumage à faisceau de câbles haute-tension intégré pour moteur à combustion interne de véhicule automobile.**

(57) La tête amovible de distributeur (1) et d'allumage de moteur à combustion interne est caractérisée par le fait que les éléments conducteurs de distribution et d'alimentation sont noyés, tout ou en partie, y compris les extrémités des câbles (6) auxquels ils sont reliés, dans un enrobage de matière isolante (26) lui-même solidarisé au corps (2) de la tête amovible de distributeur (1).

FIG.7

# TETE AMOVIBLE DE DISTRIBUTEUR D'ALLUMAGE A FAISCEAU DE CABLES HAUTE TENSION INTEGRE POUR MOTEUR A COMBUSTION INTERNE DE VEHICULE AUTOMOBILE

L'invention concerne les têtes amovibles de distributeur d'allumage de moteur à combustion interne, constituées par des corps en matériau isolant dans lesquelles sont disposés les éléments conducteurs électriques qui se terminent, dans la face interne du corps, par des plots conducteurs de distribution successivement en contact avec le doigt de distribution et qui débouchent à l'extérieur par des câbles haute tension, câbles à chacun desquels est reliée une bougie d'allumage.

Outre les conducteurs électriques de distribution, un élément conducteur électrique d'alimentation est disposé dans le corps, et comporte, débouchant à l'extérieur, un câble d'alimentation devant être relié à la bobine productrice de courant haute tension et, à son extrémité débouchant à l'intérieur du corps, un plot d'alimentation en forme de douille dans laquelle est logé un charbon en contact avec une languette conductrice portée par un doigt de distribution. La distribution du courant haute tension à l'intérieur du distributeur est assurée par le doigt de distribution tournant, recevant le courant haute tension à partir de la borne d'alimentation portée par la tête, ce courant passant par la languette conductrice, qui par la rotation du doigt, défile devant les plots conducteurs reliés aux bougies correspondantes par l'intermédiaire des câbles haute tension du faisceau d'allumage.

Il est connu, notamment par les brevets FR-A-832 124 et FR-A-2 220 892, que les câbles haute tension du faisceau d'allumage soient incorporés à la tête même du distributeur de manière inamovible. Pour cela, les câbles haute tension sont reliés aux plots conducteurs correspondants et maintenus fermement soit, comme le FR-A-832 124, par pincement sur le corps de distributeur à l'aide d'un capot fixé sur ledit corps, ou bien, comme le FR-A-2 220 892, à l'aide d'organes de liaison mécaniques tels que vis et rondelles.

Bien que ces solutions donnent une garantie effective contre une déconnexion accidentelle due à une fausse manoeuvre lors d'une intervention sur le moteur ou même due aux vibrations provoquées par une route en mauvais état, une telle déconnexion ayant pour effet de provoquer des "ratés" d'allumage dans le circuit d'allumage et, dans le cas où celui-ci possède un système anti-pollution composé d'un catalyseur, la destruction instantanée de celui-ci, il n'en reste pas moins que les liaisons difficilement étanches des plots conducteurs aux câbles haute tension sont soumises à l'humidité ambiante et à des risques de contournement électrique.

La présente invention a pour but de pallier cet inconvénient et concerne, à cet effet, une tête amovible de distributeur d allumage de moteur à combustion interne, constituée par un corps amovible en matériau isolant sur ou dans laquelle sont fixées l'une des extrémités de chacun des câbles haute-tension de distribution et l'extrémité du câble haute tension d'alimentation, lesquels câbles de distribution relient des éléments conducteurs électriques de distribution qui se terminent sur la face interne du corps creux par des plots conducteurs, successivement en contact avec un doigt de distribution, à des bougies d'allumage, tandis que le câble d'alimentation relie un plot d'alimentation en forme de douille dans laquelle est logé un charbon en contact avec une languette conductrice prolongée par le doigt de distribution rotatif, à une bobine d'allumage, caractérisée en ce que les extrémités des câbles haute-tension de distribution et d'alimentation, reliées respectivement aux éléments conducteurs électriques de distribution et d'alimentation, sont noyés tout ou en partie dans un enrobage de matière isolante lui-même solidarisé au corps de la tête amovible du distributeur d'allumage.

Dans un mode de réalisation préférentiel de l'invention, l'enrobage de matière isolante est obtenu par remplissage d'une résine polymérisante à chaud dans une cavité ménagée sur la tête de distributeur et dans laquelle ont été disposés, préalablement, les éléments conducteurs de distribution et d'alimentation, en bout des câbles haute tension correspondants auxquels ils sont reliés.

Dans une variante du mode de réalisation ci-dessus, la cavité est obtenue sous la forme d'un capot isolant fixé sur la partie supérieure de la tête de distributeur et qui recouvre les éléments conducteurs de distribution et d'alimentation, lesquels sont disposés sur ladite partie supérieure du corps au travers de laquelle ils débouchent.

Dans une autre variante, le corps est obtenu sous la forme d'un réceptacle ménagé dans la partie supérieure du corps et fermé par un couvercle isolant après que soient disposés les éléments conducteurs de distribution et d'alimentation.

La description qui va suivre, en regard des dessins annexés donnés à titre d'exemple, fera bien comprendre comment l'invention peut être réalisée, dessins selon lesquels :

- Les figures 1 et 2 sont des vues en coupe de la tête amovible de distributeur conforme à l'invention faite selon respectivement les lignes I-I et II-II de la figure 3, avec des éléments conducteurs de distribution et d'alimentation, avant remplissage de résine.

- La figure 3 est une vue de dessus de la tête amovible de distributeur dont on a enlevé le capot pour une meilleure compréhension de l'invention.

- La figure 4 est une vue en perspective de la tête amovible de distributeur non équipée.

- La figure 5 est une vue en coupe faite selon la ligne V-V de la figure 1.

- La figure 5A est une vue partielle (détail A) de la figure 5 suivant un autre mode de réalisation des moyens de fixation du capot.

- Les figures 6 et 7 sont des vues en coupe longitudinale d'une tête amovible de distributeur selon un autre mode de réalisation, passant respectivement par l'élément conducteur d'alimentation et l'un des éléments conducteurs de distribution.

- La figure 8 est une vue de dessous avec coupe partielle d'une tête de distributeur d'allumage selon un autre mode de réalisation.

- La figure 9 est une vue de face de la tête représentée à la figure 8 avant coulage de la résine.

- La figure 10 est une vue en perspective éclatée d'une tête amovible de distributeur conforme à l'invention selon une variante du mode de réalisation représenté sur les figures 1 et 2.

- La figure 11 est une vue en perspective éclatée d'une tête amovible de distributeur analogue à celle de la figure 10 à l'exception du couvercle.

- La figure 12 est une vue en perspective d'une tête amovible de distributeur suivant un autre mode de réalisation.

- La figure 13 est une vue analogue à la figure 11 à l'exception des éléments conducteurs réalisés selon un autre mode de réalisation.

- Les figures 14 et 14a sont des vues représentant deux modes de réalisation de connexions ;

- La figure 15 est une vue en perspective d'une tête amovible de distributeur selon un autre mode de réalisation, sur laquelle l'enrobage isolant en forme de galette a été représenté transparent et une partie de la tête de distributeur en traits mixtes.

- Les figures 16 et 17 sont des vues en coupe faites selon respectivement les lignes XVI-XVI et XVII-XVII de la figure 15.

- La figure 18 est une vue en perspective éclatée de l'élément conducteur de distribution utilisé suivant le mode de réalisation de la figure 15.

- La figure 19 est une vue en plan de la platine de forme à partir de laquelle l'enrobage en forme de galette est réalisé selon un autre mode de réalisation.

- La figure 20 est une vue en plan de la platine de forme de la figure 19 équipée du faisceau de câbles haute-tension à enrober.

- La figure 21 est une vue en perspective de l'enrobage en forme de galette réalisé par moulage à partir de la platine de forme équipée de la figure 20.

- La figure 22 est une vue en perspective de la tête amovible de distributeur obtenue par surmoulage de la galette d'enrobage de la figure 21.

- La figure 23 est une vue en coupe faite selon la ligne XXIII-XXIII de la figure 22

- La figure 24 est une vue en coupe faite selon la ligne XXIV-XXIV de la figure 22.

- La figure 25 est une vue en coupe faite selon la ligne XXV-XXV de la figure 22.

- La figure 26 représente un flan découpé constituant la connectique d'une tête de distributeur selon un autre exemple de réalisation de l'invention.

- Les figures 27 et 28 représentent un enrobage du flan découpé de la figure 26.

- La figure 29 représente une vue en coupe d'une tête de distributeur obtenue par l'exemple de réalisation des figures 26 à 28.

- La figure 30 représente un flan découpé selon une variante du précédent exemple de réalisation.

- La figure 31 représente une vue d'une tête de distributeur obtenue par surmoulage direct du flan découpé de la figure 30.

- Les figures 32 et 33 représentent un support isolant d'une tête de distributeur selon un autre exemple de réalisation de l'invention.

- La figure 34 représente le support isolant sur lequel sont disposés et connectés des câbles haute-tension, selon l'exemple de réalisation présenté fig. 32 et 33.

- La figure 35 représente, en coupe, une tête de distributeur à l'état final, selon l'exemple de réalisation présenté fig. 32 et 33.

En se référant aux dessins, on voit que l'on a désigné par 1, dans son ensemble, la tête amovible de distributeur dans laquelle pénètrent cinq câbles haute tension désignés de 3 à 6 pour les câbles de distribution et par 7 pour le câble d'alimentation.

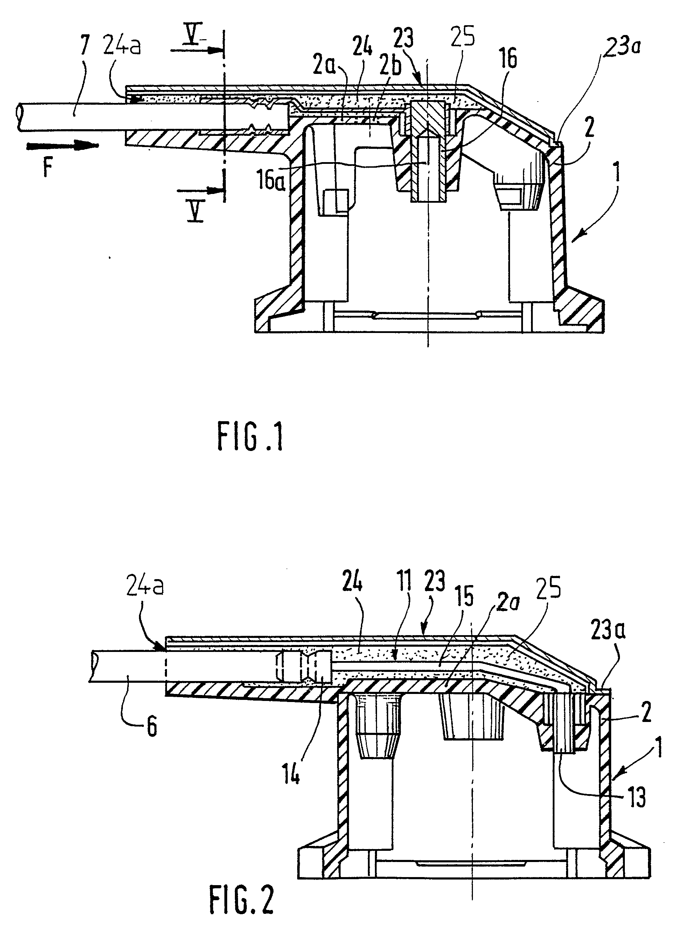

Dans un premier mode de réalisation, plus particulièrement représenté sur les figures 1 à 5, les câbles haute tension 3 à 7 sont disposés sur la partie supérieure du corps creux 2 de la tête amovible de distributeur 1 et relient, pour les uns dits de distribution 3 à 6, une bougie d'allumage à des éléments conducteurs respectifs 8 à 11 qui, après avoir traversé le corps creux 2, se terminent à l'intérieur de celui-ci par des plots conducteurs de distribution équilatéralement répartis 13, et pour l'autre dit d'alimentation 7, une bobine d'allumage (non représentée) à un élément conducteur 12.

Les câbles 3 à 6 sont reliés aux éléments conducteurs 8 à 11 par des embouts 14 eux-mêmes reliés aux plots conducteurs 13 par un fil conducteur métallique 15 dont les extrémités sont emmanchés à force dans l'embout 14 et le plot conducteur 13.

L'embout 14 est conformé pour recevoir une douille (non représentée) fixée à l'extrémité des câbles haute tension.

L'élément conducteur 12 se termine par un plot d'alimentation en forme de douille 16 qui traverse le corps 2 et dont l'alésage 16a est adapté à recevoir un charbon.

Il est évident que les éléments conducteurs de distribution et d'alimentation 8 à 12 peuvent être réalisés de toute autre manière que celle décrite.

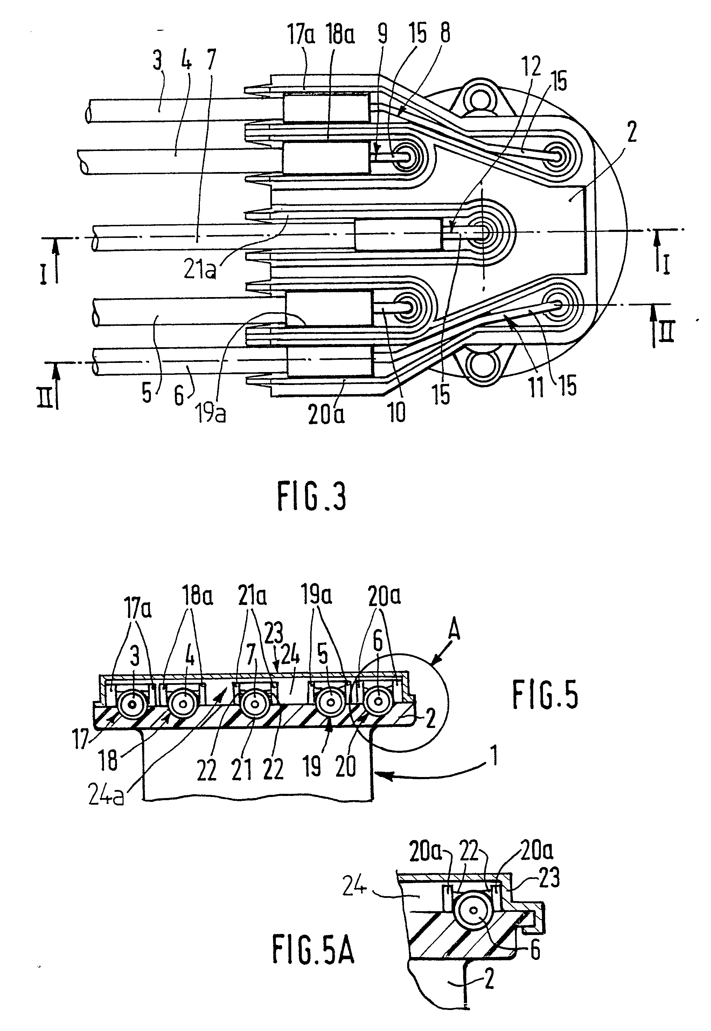

Comme représentés plus particulièrement sur les figures 3 et 4, les câbles haute tension ont leurs extrémités 3 à 7 disposées dans de mêmes conduits 17 à 21 que les éléments conducteurs 8 à 12 qui les prolongent et qui sont ménagés sur la partie supérieure du corps 2.

En raison de la haute tension existante, il est primordial que ces éléments conducteurs et les extrémités des câbles qui les relient dans la tête amovible de distributeur 1 soient disposés d'une manière telle à présenter des lignes de fuite les plus longues possibles.

La solution la plus avantageuse consiste à border, tout ou en partie, les conduits par des nervures ou ailettes 17a à 21a lesquelles entourent également les ouvertures 13a et 16a à travers lesquelles traversent les plots 13 et la douille 16. On obtient ainsi les parois latérales des conduits qui forment des chicanes aux lignes de fuite. Les conduits 17 à 21 étant juxtaposés les uns aux autres et constitués chacun par des nervures formant leurs parois latérales et fermant leurs extrémités autour des orifices par lesquels traversent les plots 13 et la douille 16, il s'ensuit que les câbles haute tension et leurs éléments conducteurs sont isolés les uns des autres par une douille chicane augmentant d'autant les lignes de fuite.

Avant l'assemblage définitif du faisceau de câbles dans la tête amovible de distributeur, les extrémités de ceux-ci sont maintenues élastiquement dans leur conduit respectif.

Pour cela les nervures ou ailettes 17a à 21a, avantageusement obtenues de matière avec le corps 2 par moulage de matière isolante, comportent à proximité des entrées des conduits 17 à 21 des becquets 22 opposés en saillie des parois desdits conduits et adaptés à pincer et maintenir l'extrémité des câbles haute tension à l'intérieur des conduits respectifs qui les reçoivent.

Une fois les câbles 3 à 7 pré-assemblés sur la partie supérieure du corps 2, on recouvre le tout par un capot isolant 23, en laissant subsister une cavité 24 ayant une entrée 24a, délimitée autour des câbles 3 à 7. Par l'entrée 24a on verse une résine isolante à chaud pour former un enrobage 25, dans lequel sont noyés les extrémités des câbles 3 à 7 et les éléments conducteurs 8 à 11, à l'exception des plots conducteurs 13 et de la douille 16 saillant à l'intérieur du corps 2.

Le capot 23 est obtenu par moulage de matériau isolant tel que du polyester thermoplastique.

Le capot 23 est fixé sur la partie supérieure du corps 2 par tout moyen connu, notamment par soudure à partir d'un rebord 23a agencé de matière autour du capot le long de la périphérie de la surface recouverte de la partie supérieure 2a du corps 2.

Le capot peut être également fixé sur la partie supérieure 2a du corps 2 par encliquetage élastique comme représenté sur la figure 5A.

On obtient ainsi un ensemble de tête amovible de distributeur monobloc muni de son faisceau de câblage indivisible et dont les éléments conducteurs, noyés dans l'enrobage de matériau isolant, sont protégés de manière étanche à l'humidité.

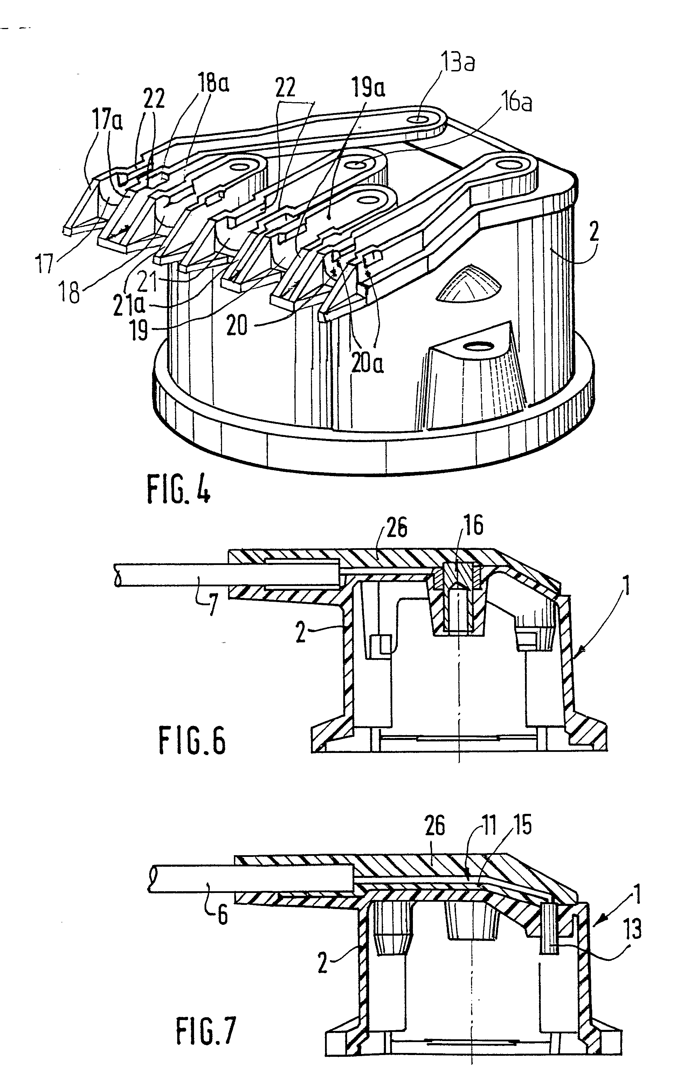

Comme représenté sur les figures 6 et 7, il peut être avantageux d'enrober les extrémités des câbles 3 à 7 et leurs éléments conducteurs associés respectifs 8 à 12, une fois disposés sur la partie supérieure 2a du corps 2, par surmoulage d'un enrobage de matière isolante 26 directement sur ladite partie supérieure 2a du corps 2. La matière isolante utilisée devra être compatible chimiquement avec celle du corps 2 et des éléments qu'elle enrobe.

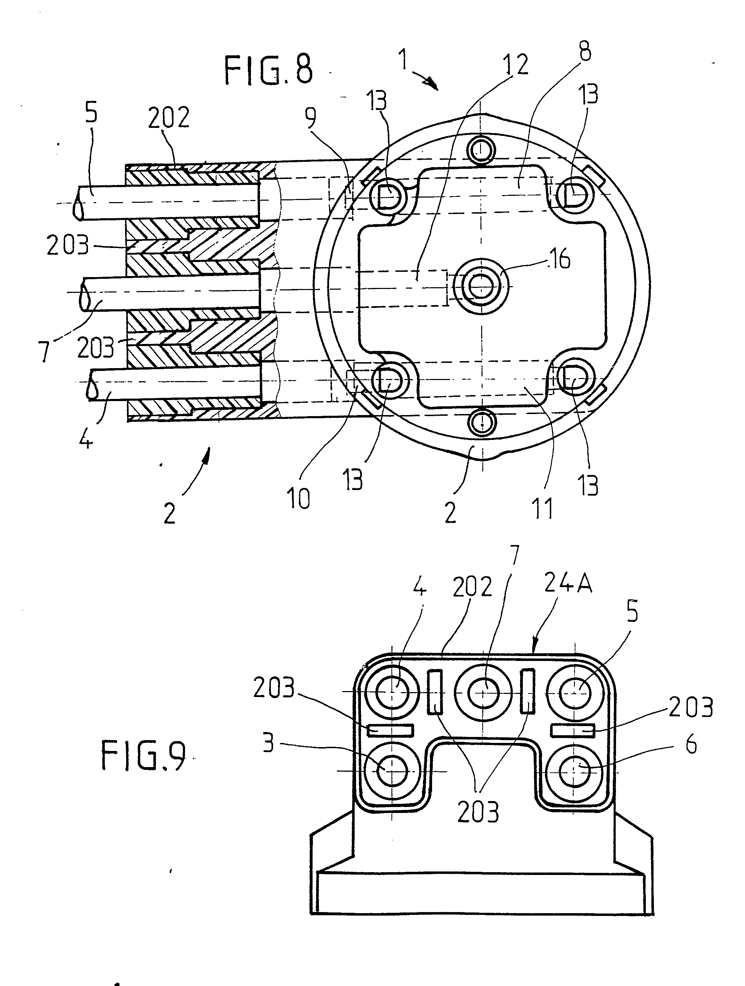

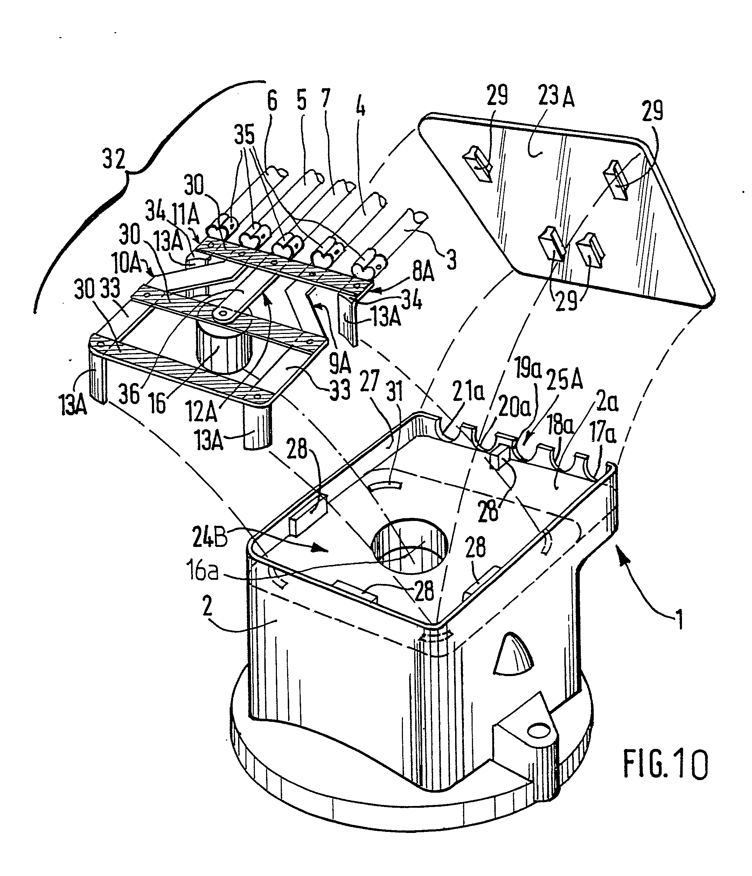

Aux figures 8 et 9, représentant un autre exemple de réalisation de l'invention, le corps isolant 2 présente, obtenu de moulage, un réceptacle 24A sous la forme d'un boîtier délimité par les parois 202. Des câbles haute tension d'alimentation 7 et de distribution 3 à 6 sont connectés respectivement à des éléments conducteurs de courant 12 et 8 à 11 qui sont insérés et encliquetés dans des logements appropriés. Les plots conducteurs d'alimentation 16 et de distribution 13 sont ensuite insérés à force ou par ultra-sons dans des logements ménagés dans le corps 2 de manière à établir un contact élastique avec les éléments conducteurs respectifs 12 et 8 à 11.

Une résine isolante est ensuite versée dans le réceptacle 24A, de manière à emprisonner les câbles haute-tension 3 à 7 dans le réceptacle 24A lorsque la résine aura durci. Il est à noter que des parois 203 sont obtenues de moulage avec le corps 2 et permettent de former des chicanes aux lignes de fuite et d'éviter la pliure du câble à la sortie de l'enrobage de la résine.

On a représenté sur la vue éclatée en perspective de la figure 10, une variante de réalisation, plus particulièrement dans le fait que la cavité est réalisée sous la forme d'un réceptacle 24B ménagé sur la partie supérieure 2a du corps 2 et constitué de ladite partie 2a délimitée par un entourage périphérique 27 venant de matière avec le corps 2. Sur le bord d'entrée 25A du réceptacle 24B, sont ménagés des échancrures 17a à 21a au travers desquelles les extrémités des câbles 3 à 7 pénètrent dans ledit réceptacle. Celui-ci est complété d'un couvercle 23A que l'on pose dans le réceptacle 24A sur des butées 28 réparties sur les bords intérieurs de l'entourage 27 après avoir disposé les éléments conducteurs 8A à 12A montés en faisceaux 32. Sur sa face intérieure, le couvercle 23A présente une pluralité d'ergots d'ancrage 29 qui, emprisonnés dans l'enrobage, maintiennent le couvercle sur les butées 28.

Les ergots d'ancrage 29 ont un profil adapté à présenter des parties saillantes aptes à empêcher l'arrachement du couvercle 23A après polymérisation de la résine.

Pour faciliter l'assemblage de la tête amovible de distributeur 1, les éléments conducteurs 8A à 12A sont reliés les uns aux autres par des traverses isolantes 30 pour constituer un faisceau 32. Celles-ci peuvent être avantageusement réalisées par surmoulage de matière isolante sur les éléments conducteurs 8A à 12A prédisposés.

Les éléments conducteurs de distribution 8A à 11A sont obtenus dans des languettes découpées 33 et 34 et repliées à l'une des extrémités pour constituer des plots conducteurs 13A aptes à traverser la partie supérieure 2a du corps 2 par autant de fentes 31 équilatéralement réparties, et à saillir à l'intérieur dudit corps.

A leur autre extrémité les languettes 33 et 34 sont pourvues de cosses 35 serties sur les câbles haute-tension 3 à 6.

L'élément conducteur d'alimentation 12A est constitué d'une languette 36 dont l'une des extrémités est pourvue d'une cosse 35 sertie au câble 7 et l'autre extrémité soudée à la douille 16.

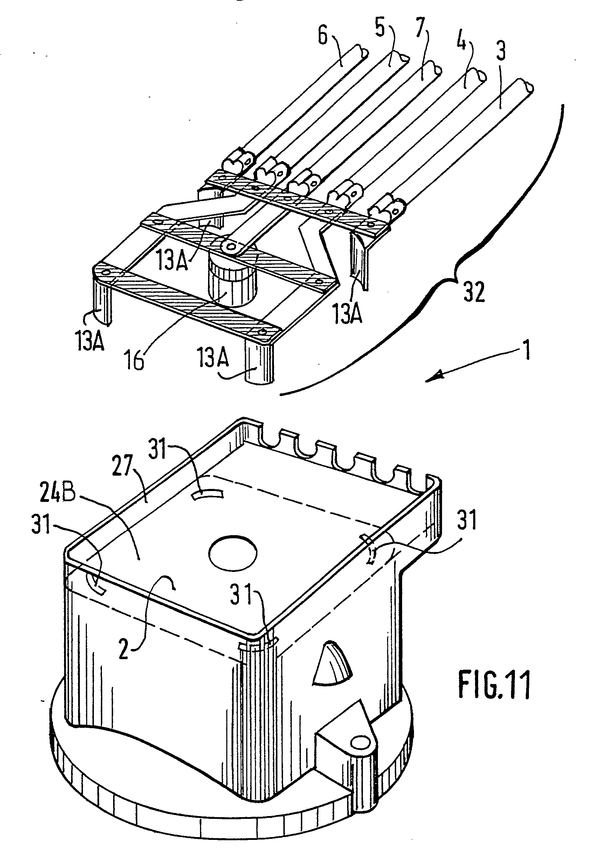

La figure 11 montre une réalisation qui diffère essentiellement de la précédente en ce que l'enrobage est obtenu par surmoulage en matière isolante du faisceau de câblage 32 dans le réceptacle 24B, supprimant ainsi le couvercle 23A de la figure 10.

Après positionnement du faisceau de câblage 32, dans le réceptacle 24B, les plots conducteurs 13A insérés dans les fentes correspondantes 31, et la douille 16 dans son logement 16a, on coulé de la résine isolante dans le réceptacle 24B.

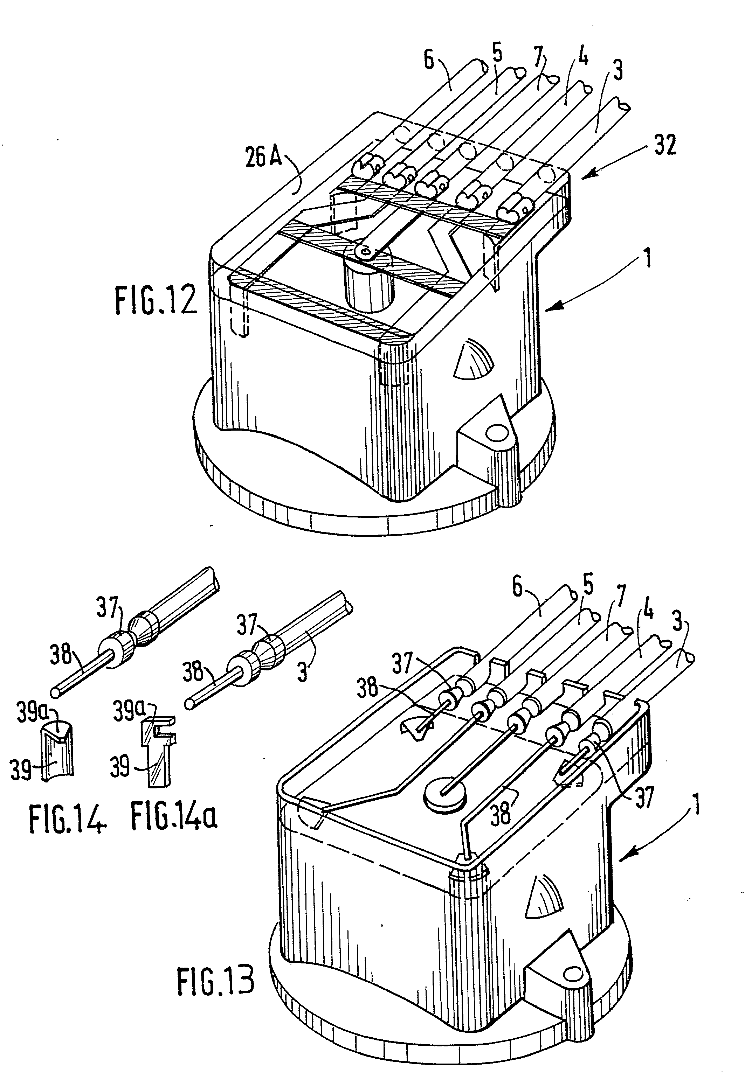

La figure 12 fait état d'une réalisation analogue à la réalisation de la figure 11, à l'exception de l'entourage 27 de la partie supérieure 2a du corps 2 contenant l'enrobage 26A qui a été supprimé, la rapprochant de la réalisation des figures 6 et 7.

La réalisation représentée sur la figure 13 diffère essentiellement de celle de la figure 11 par son faisceau de câblage.

En effet, les éléments conducteurs qui le composent sont constitués, d'une part d'embouts 37 sertis en bout des câbles haute tension 3 à 7 et dans lesquels sont ancrés des fils conducteurs et, d'autre part, de plots conducteurs 39 sur l'extrémité 30a, desquels les fils conducteurs 38 sont soudés (fig.4) ou sertis (fig. 14a), l'extrémité 39a se trouvant en saillie de la partie supérieur 2a du corps 2.

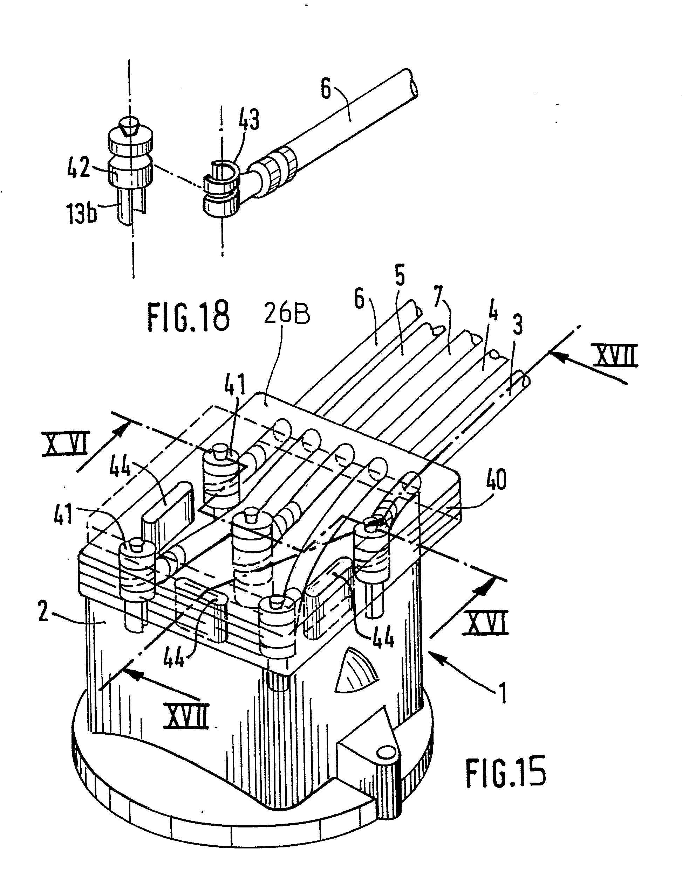

Le mode de réalisation représenté sur les figures 15 à 18 est remarquable en ce que l'enrobage 26B des éléments conducteurs se présente sous la forme d'une galette intermédiaire 40 sur laquelle le corps 2 est surmoulé.

La galette 40 peut être réalisée par polymérisation d'une résine époxyde liquide dans un moule recyclable.

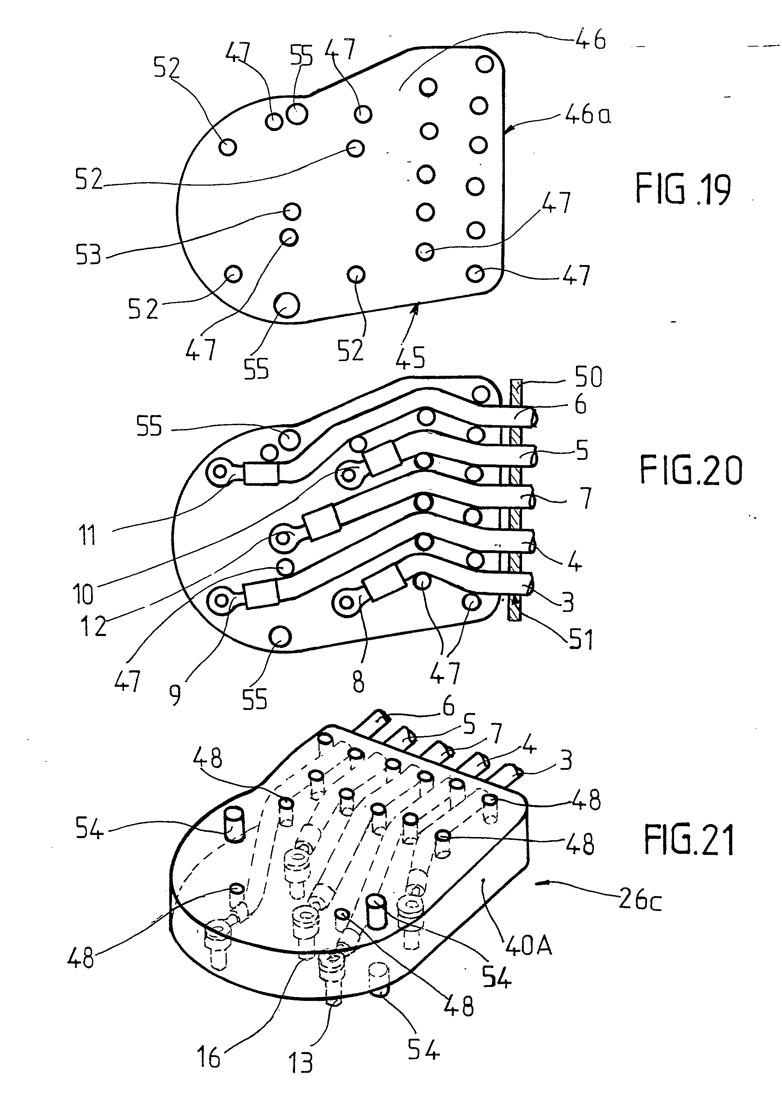

Les éléments conducteurs de distribution du faisceau de câblage qui sont noyés dans la galette 40 sont constitués d'embouts 41 dont l'une des extrémités forme le plot conducteur 13b débouchant à l'intérieur du corps 2, tandis que l'autre extrémité cylindrique 42 est agencée de manière à recevoir, par encliquetage élastique, une cosse tubulaire 43 sertie en bout des câbles d'alimentation 7 et de distribution 3 à 6 (figure 18).

L'élément conducteur d'alimentation en bout du câble 7 diffère essentiellement des éléments conducteurs d'alimentation ci-dessus en ce que le plot conducteur 13b est remplacé par un plot d'alimentation en forme de douille 16 dont l'alésage est adapté à recevoir un charbon (non représenté).

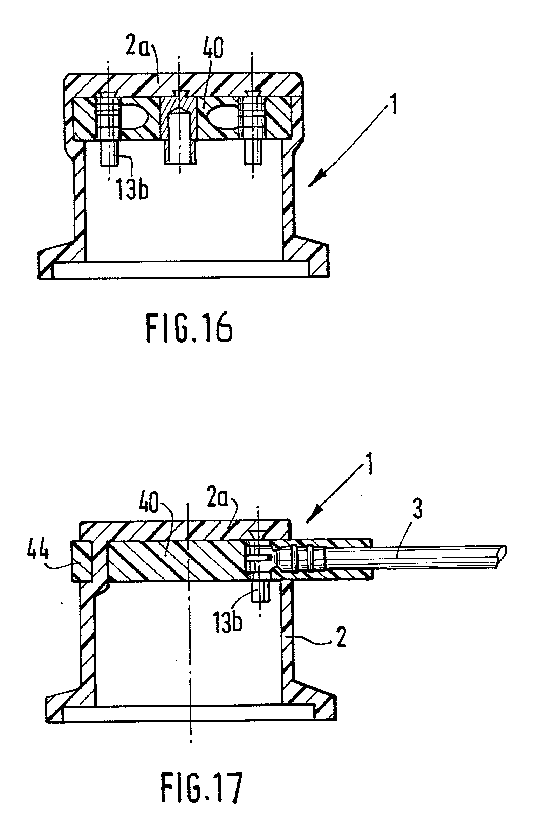

La galette 40 comporte une pluralité de lumières 44 dans lesquelles pénètre la matière de surmoulage (PBTP) du corps 2 de la tête amovible de distributeur 1 (figure 17).

Le mode de réalisation représenté sur les figures 19 à 25 est analogue à celui des figures 15 à 18 et diffère essentiellement en ce que l'enrobage 26c qui se présente sous la forme d'une galette 40A est réalisé après positionnement des extrémités des câbles 3 à 7 prolongés par les éléments conducteurs 8 à 12 sur une platine de forme 45 à partir de laquelle ladite galette est moulée (Fig. 20).

Les figures 19 et 20 montrent la platine 45 qui comporte une plaque de base 46 dans laquelle sont ménagés des évidements 52, 53. Les évidements 52 sont aptes à recevoir les plots conducteurs de distribution 13 tandis que l'évidement 53 est agencé pour recevoir le plot conducteur d'alimentation 16.

Des colonnettes 47 sont disposées en quinconce sur la face supérieure de la plaque de base 46, les unes en quinconce à proximité de l'extrémité frontale 46a de la platine 45 par laquelle débouchent les câbles haute-tension 3 à 7, selon deux rangées approximativement parallèles.

Les câbles haute tension 3 à 7 sont dirigés entre les colonnettes 47 de manière qu'ils suivent un trajet approximativement en zigzag pour être ensuite ramenés, à l'extérieur de la platine, dans des directions approximativement parallèles entre elles et sur un même plan par l'intermédiaire d'une barrette 50 qu'ils traversent par des serre-fils 51 (fig. 20).

La platine de forme 45, une fois équipée du faisceau de câbles 3 à 7, est disposée dans un moule (non représenté) dans lequel est effectuée l'opération d'enrobage par moulage de la galette 40A.

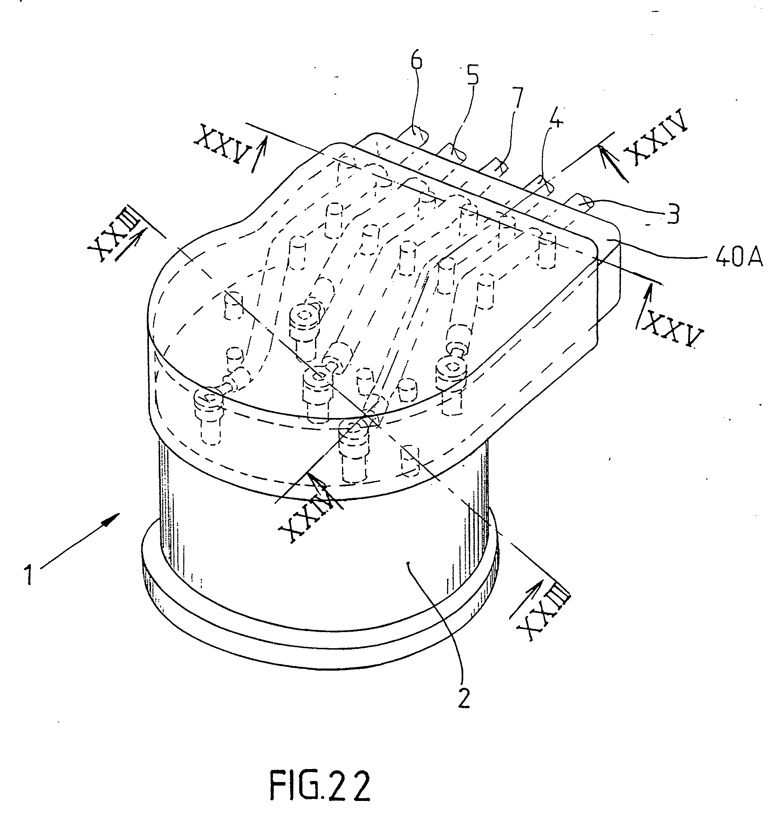

Dans le moule (non représenté) et sur la face supérieure de la plaque de base 46 sont prévues des empreintes 55 pour former, lors de l'opération de moulage de la galette 40A, des doigts d'ancrage 54 en saillie, de part et d'autre de la galette 40A (Fig. 21 et 22).

Après moulage et désolidarisation de la platine de forme 45 la galette 40A présente autant d'orifices 48 qui la traversent que de colonnettes 47 que comportait la platine 45 (Fig. 21).

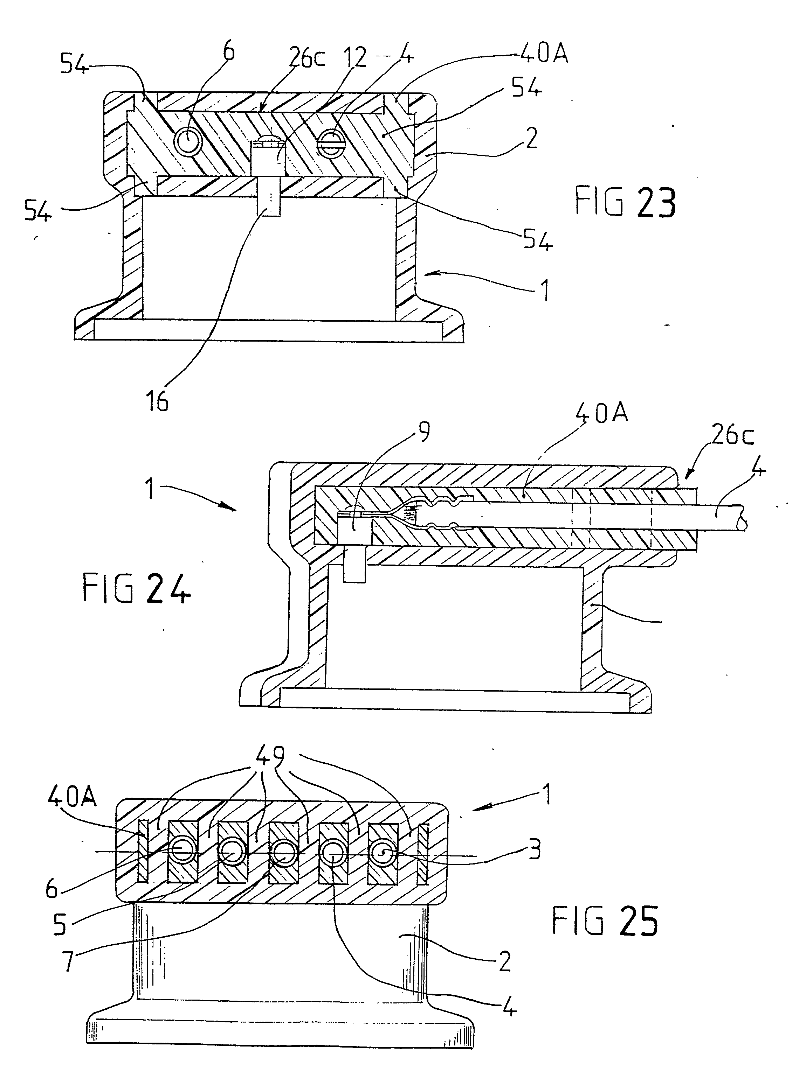

Lors du surmoulage du corps 2 du distributeur, la matière qui le compose flue dans les orifices 48 de la galette 40A en constituant par remplissage des traverses d'ancrage 49 (Fig. 25).

Une telle réalisation permet, par les doigts d'ancrage 52 et les traverses 49, une solidarisation mécanique effective de la galette 40A au corps 2 du distributeur et une grande résistance à l'arrachement des câbles haute tension de la tête de distributeur.

La solidarisation de la galette 40A dans le corps 2 de la tête de distribution est d'autant plus forte que la résine isolante qui compose ladite galette est compatible chimiquement avec le matériau isolant composant le corps 2.

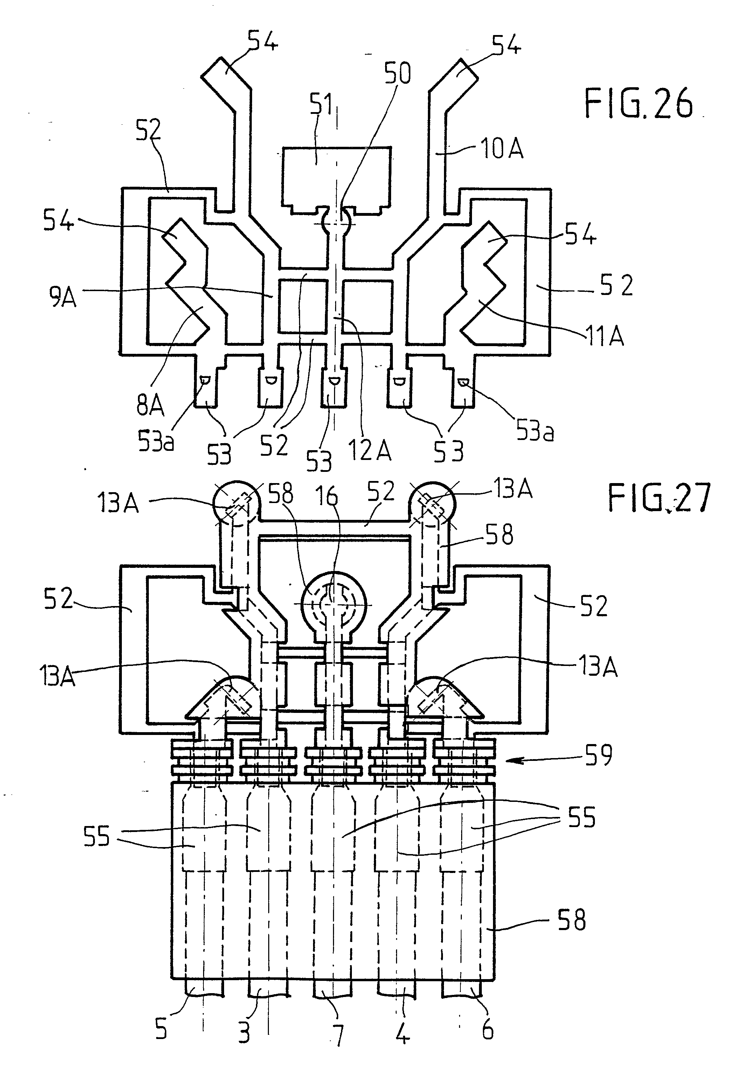

Selon un autre exemple de réalisation de l'invention représenté aux figures 26 à 29, un flan de laiton est découpé et présente un conducteur électrique d'alimentation 12A se terminant à l'une de ses extrémités par une pastille 50 et par une partie rectangulaire 51. D'autres conducteurs électriques de distribution 8A à 11A sont obtenus par découpe du flan de laiton et sont reliés entre eux et au conducteur 12A, par des ponts 52. L'autre extrémité de chacun des conducteurs d'alimentation 12A et de distribution 8A à 11A se termine sous la forme de fiches 53 alignées et situées sur un même plan, et terminées par exemple d'un embout d'ancrage 53a.

Les extrémités 54 des conducteurs électriques de distribution 8A à 11A sont pliées à 90° de manière à former des plots de distribution 13A, et la partie rectangulaire 51 est également pliée à 90° et enroulée de manière à former un plot d'alimentation 16 en forme de douille, dont la pastille 50 forme le fond. Des embouts 55 sont verrouillés sur les extrémités en forme de fiche 53 des éléments conducteurs 8A à 12A, après que les câbles 3 à 7 aient été sertis dans la partie tubulaire fendue des embouts 55 prévus pour établir un contact électrique avec l'âme des câbles 3 à 7.

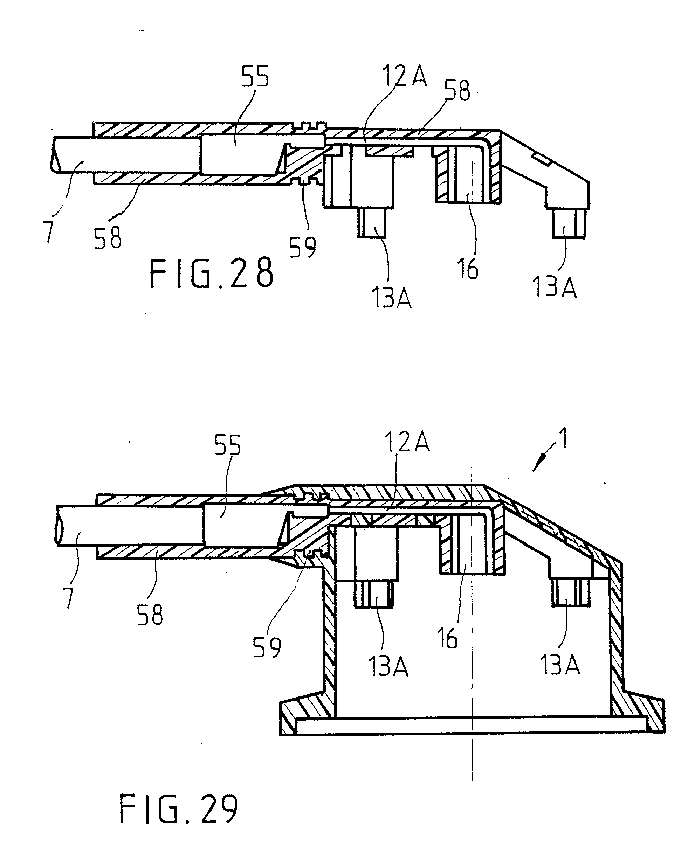

L'ensemble ainsi constitué est surmoulé d'une matière isolante pour former un enrobage 58 (figure 27) ne laissant apparaître que les ponts 52 qui, après durcissement de l'enrobage 58 formant un ensemble compact, sont rompus (figure 28) afin d'isoler électriquement entre eux les conducteurs électriques d'alimentation 12A et de distribution 8A à 11A. Cette opération peut d'ailleurs avoir lieu après mise en place du sous-ensemble (figure 28) dans le moule de surmoulage définitif. L'enrobage 58 présente une partie crénelée 59 grâce à laquelle ledit enrobage 58 sera solidement intégré avec le surmoulage d'une seconde matière isolante afin de réaliser le corps 2 (figure 29) de la tête de distributeur 1.

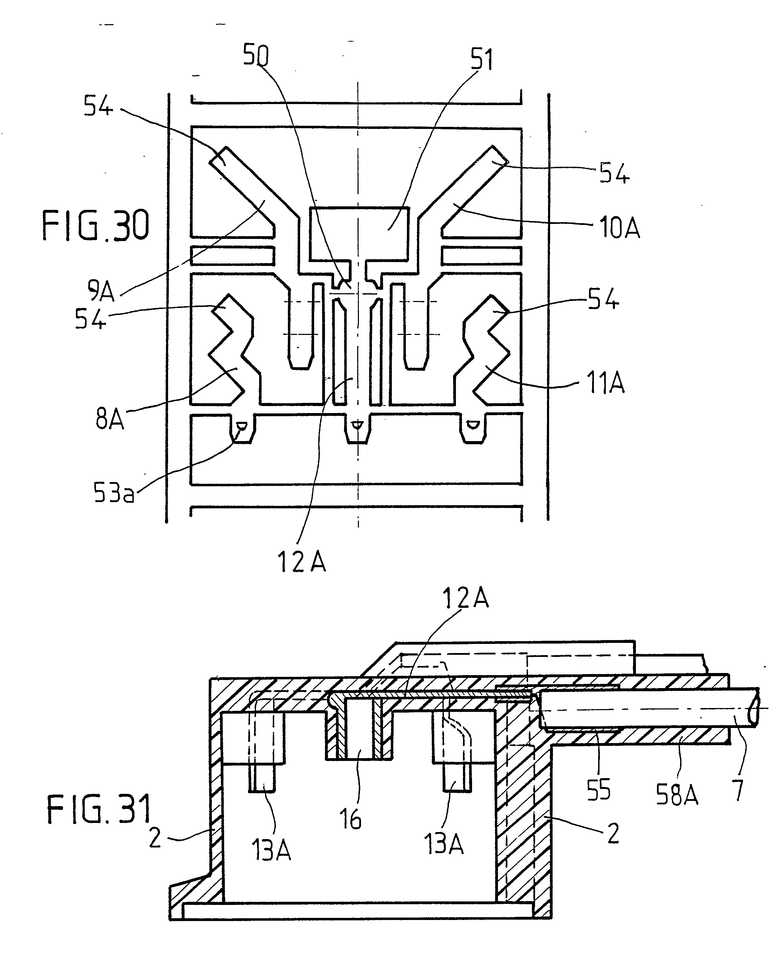

La variante représentée sur les figures 30 et 31 diffère légèrement du mode de réalisation précédent en ce que, dans le flan de laiton découpé, comme précédemment décrit, les extrémités 54 des conducteurs de distribution 8A à 11A sont pliées à 90° pour constituer des plots de distribution 13, tandis que le plot d'alimentation 16 est obtenu par pliage du rectangle 51 et par la pastille 50.

Le circuit découpé ainsi obtenu est directement surmoulé d'une matière isolante constituant simultanément l'enrobage 58A et le corps 2. La suppression des ponts 52 et le pliage des extrémités 54 des conducteurs de distribution 8A à 11A s'effectuent de manière automatique au cours de l'opération de surmoulage.

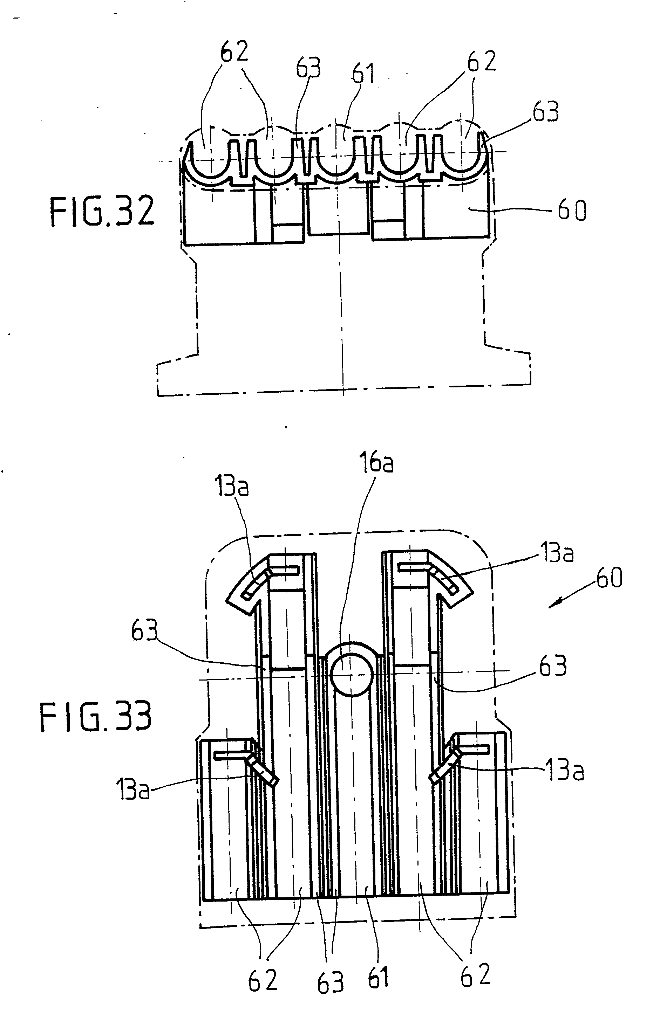

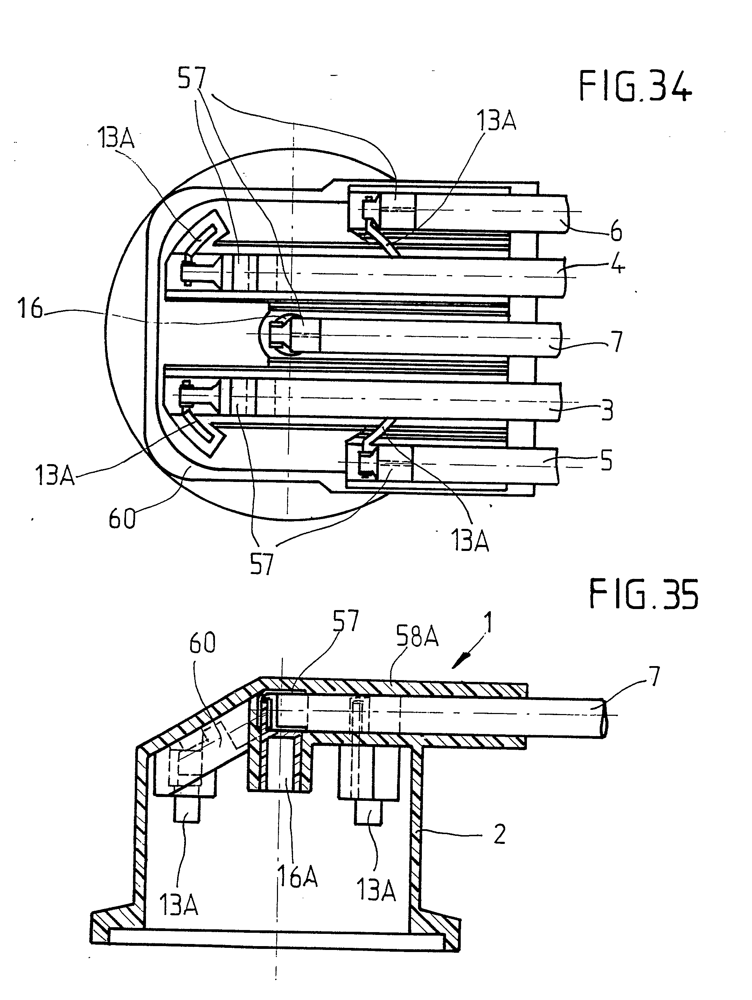

Selon un autre exemple de réalisation de l'invention, représenté sur les figures 32 à 35, un support isolant 60 comporte cinq canaux, l'un 61 d'alimentation et les autres 62 de distribution bordés par des ailes ou cloisons 63, le support isolant 60 intègre les logements 13a et 16a du plot d'alimentation 16 et des plots de distribution 13A qui sont obtenus par découpe et sont insérés après moulage. Des câbles haute-tension 3 à 7 sont disposés dans les canaux 61 et 62 correspondants et sont connectés à leurs plots respectifs à l'aide d'embouts 57 prévus à cet effet se verrouillant comme les embouts 55. L'ensemble ainsi obtenu est enrobé par surmoulage du corps isolant 2 afin de constituer une tête de distributeur 1 intégrant ledit corps isolant 2 et les câbles haute-tension 3 à 7.

Il est bien entendu que les modes de réalisation ci-dessus décrits ne présentent aucun caractère limitatif et peuvent recevoir toutes modifications désirables, sans sortir du cadre de l'invention.

C'est ainsi que les caractéristiques décrites en regard d'un certain mode de réalisation peuvent être appliquées à un autre tant dans la réalisation des éléments conducteurs que dans la réalisation des cavités recevant la résine.

C'est ainsi que le remplissage de la cavité 24 (figure 1) par la résine peut s'effectuer par au moins un orifice 2b ménagé dans la paroi de la partie supérieure 2a du corps 2 comme par tout endroit du réceptacle ou du corps 2.

Le remplissage peut également être effectué par tout endroit du corps 2, les orifices 2b servant d'évents.

On pourra également utiliser une partie du moule d'enrobage de la galette 40A (Fig. 21) pour réaliser la platine de forme 45 (Fig. 20).


**Revendications**

1) Tête amovible de distributeur (1) d'allumage de moteur à combustion interne, constituée par un corps creux (2) en matériau isolant sur ou dans laquelle sont fixées l'une des extrémités de chacun des câbles haute-tension de distribution (3 à 6) et l'extrémité du câble haute tension d'alimentation (7), lesquels câbles de distribution (3 à 6) relient des éléments conducteurs électriques de distribution (8 à 11), qui se terminent sur la face interne du corps creux (2) par des plots conducteurs (13) successivement en contact avec un doigt de distribution, à des bougies d'allumage, tandis que le câble d'alimentation (7) relie un plot d'alimentation (16) en forme de douille dans laquelle est logé un charbon en contact avec une languette conductrice prolongée par le doigt de distribution à une bobine d'allumage, caractérisée en ce que les extrémités des câbles haute-tension de distribution (3 à 6) et d'alimentation (7), reliées respectivement aux éléments conducteurs électriques de distribution (8 à 11) et d'alimentation (12) sont noyés tout ou en partie dans un enrobage (25,26,26A,40,40A,58) de matière isolante, lui-même solidarisé au corps (2) de la tête (1) de distributeur.

2) Tête amovible de distributeur (1) selon la revendication 1, caractérisée en ce que l'enrobage est obtenu par remplissage d'une résine thermodurcissable dans une cavité (24,24A) ménagée sur la partie supérieure (2a) du corps (2) et dans laquelle ont été disposés préalablement les éléments conducteurs de distribution (8 à 11) et d'alimentation (12), en bout des câbles haute tension (3 à 7) correspondants auxquels ils sont reliés.

3) Tête amovible de distributeur (1) selon la revendication 2, caractérisée en ce que la cavité (24) est obtenue par un capot (23) isolant fixé sur la partie supérieure (2a) du corps (2) et qui recouvre les éléments conducteurs de distribution (3 à 6) et d'alimentation (7), lesquels sont disposés au-dessus de la partie supérieure (2a) du corps (2) qu'ils traversent pour déboucher à l'intérieur dudit corps (2).

4) Tête amovible de distributeur (1) selon la revendication 2, caractérisée en ce que la cavité (24) est obtenue sous la forme d'un réceptacle (24A) ménagé sur la partie supérieure (2a) du corps (2) et dans laquelle, après que soient disposés les éléments conducteurs dans ledit réceptacle (24A), est coulée une résine isolante.

5) Tête amovible de distributeur (1) selon la revendication 4, caractérisée en ce que le réceptacle (24A) est formé de la partie supérieure (2a) du corps (2) bordé par un entourage périphérique (27) venant de matière avec ledit corps (2).

6) Tête amovible de distributeur (1) selon la revendication 4, caractérisée en ce que le réceptacle (24A) est fermé par un couvercle isolant avant polymérisation de la résine.

7) Tête amovible de distributeur (1), selon la revendication 4, caractérisée en ce que le réceptacle (24A) se présente sous la forme d'un boîtier dirigé latéralement et délimité par une paroi périphérique (202).

8) Tête amovible de distributeur (1) selon les revendications 1 et 4, caractérisée en ce que l'enrobage est obtenu par surmoulage de matière isolante directement dans le réceptacle (24A) ménagé sur la partie supérieure (2a) du corps (2).

9) Tête amovible de distributeur (1) selon les revendications 4 et 5, caractérisée en ce que des échancrures (17a à 21a) sont ménagées sur le bord d'entrée (25A) du réceptacle (24A) au travers desquelles pénètrent les extrémités des câbles haute tension (3 à 7).

10) Tête amovible de distributeur (1) selon l'une quelconque des revendications 1, 4 à 6, 8 et 9, caractérisée en ce que les éléments conducteurs (8A à 12A) sont reliés les uns aux autres par des traverses isolantes (30) obtenues par surmoulage desdits éléments conducteurs (8 à 12) prédisposés.

11) Tête amovible de distributeur (1) selon la revendication 10, caractérisée en ce que les éléments conducteurs (8A à 12A) sont obtenus dans des languettes conductrices découpées (33,34) et repliées d'équerre à l'une des extrémités pour constituer des plots conducteurs (13A) aptes à traverser la partie supérieure (2a) du corps (2) par autant de fentes (31) équilatéralement réparties pour saillir à l'intérieur dudit corps (2).

12) Tête amovible de distributeur (1) selon l'une quelconque des revendications 1 à 6, 8 et 9, caractérisée en ce que les extrémités des câbles haute tension (3 à 7) et les éléments conducteurs (8 à 12) qui les prolongent sont disposés dans des conduits (17 à 21) ménagés sur la partie supérieure (2a) du corps (2), lesquels conduits sont bordés par des nervures ou ailettes (17a à 21a).

13) Tête amovible de distributeur (1) selon la revendication 1, caractérisée en ce que l'enrobage dans lequel sont noyés les éléments conducteurs (8 à 12) et les extrémités des câbles haute tension (3 à 7) auxquels ils sont reliés se présente sous la forme d'une galette (40) intermédiaire sur tout ou partie de laquelle le corps (2) est surmoulé.

14) Tête amovible de distributeur (1) selon les revendications 2 et 3, caractérisée par le fait que le remplissage de la cavité (24) s'effectue au travers d'au moins un orifice (2b) qui traverse la paroi du capot (23).

15) Tête amovible de distributeur (1) selon l'une quelconque des revendications 1 et 12, caractérisée en ce que les éléments conducteurs (8 à 12) et les extrémités des câbles haute tension (3 à 7) sont disposés, lors du moulage de l'enrobage en forme de galette (40A), sur une platine de forme (45).

16) Tête amovible de distributeur (1) selon la revendication 15, caractérisée en ce que la platine de forme (45) comporte une plaque de base (46) sur l'une au moins des faces de laquelle, d'une part sont ménagés des évidements (52,53) dans lesquels sont insérés les plots conducteurs (13) et d'alimentation (16) des éléments conducteurs (8 à 12) et d'autre part, sont disposées une pluralité de colonnettes (47) entre lesquelles les extrémités (3 à 7) des câbles haute-tension sont susceptibles d'être dirigées lors du moulage de l'enrobage en forme de galette (40A), lesquelles colonnettes laissent subsister, après moulage de ladite galette (40) et désolidarisation de la platine de forme (45), autant d'orifices (48) dans lesquels pénètre la matière du surmoulage du corps (2) pour conformer conséquemment des traverses d'ancrage (49).

17) Tête amovible de distributeur (1) selon l'une quelconque des revendications 15 ou 16, caractérisée en ce que les câbles haute-tension (3 à 7) sont maintenus parallèles entre eux à la sortie de la platine (45), lors du moulage de la galette (40), par une barrette (50) qu'ils traversent par autant de trous (51) ou serre-fils ménagés dans ladite barrette (50).

18) Tête amovible de distributeur (1) selon l'une quelconque des revendications 13, 15 et 16, caractérisée en ce que l'enrobage en forme de galette (40A) comporte, en saillie, un certain nombre de doigts d'ancrage (52).

19) Tête amovible de distributeur (1) selon la revendication 18, caractérisée en ce que les doigts d'ancrage (52) sont obtenus de matière avec l'enrobage en forme de galette (40).

20) Tête amovible de distributeur (1), selon la revendication 1 ou 13, caractérisée en ce qu'un support 60) intégrant les plots (13 et 16) reçoit les câbles (3 à 7) et les connecte auxdits plots (13 et 16) avant surmoulage de la calotte isolante (2).

21) Tête amovible de distributeur (1), selon la revendication 1, caractérisée en ce qu'un flan comportant un circuit découpé est surmoulé d'un enrobage (58) de résine isolante qui, après coupe des ponts (52) du circuit découpé, est surmoulé d'une matière isolante pour constituer le corps isolant (2) de la tête (1).

22) Tête amovible de distributeur (1), selon la revendication 1, caractérisée en ce qu'un flan comportant un circuit découpé est surmoulé, après coupe des ponts (52) du circuit, d'une matière isolante afin de constituer le corps isolant (2).

23) Tête amovible de distributeur (1), selon l'une quelconque des revendications 21 et 22, caractérisée en ce que les ponts (52) du circuit découpé sont sectionnés après mise en place du circuit dans le moule.

24) Tête amovible de distributeur (1) selon l'une quelconque des revendications 21 et 22, caractérisée en ce que le circuit découpé comporte des languettes (8A à 11A) à l'extrémité desquelles est ménagé un embouti (53a) d'ancrage susceptible de verrouiller l'extrémité en forme de clip des embouts (55) des câbles haute-tension dans lesquels ils s'ancrent.

FIG.1

FIG.2

FIG.3

FIG.5

FIG.5A

EP 0 335 051 A2

FIG. 4

FIG.6

FIG.7

FIG.8

FIG.9

EP 0 335 051 A2

FIG.10

FIG.11

FIG.12

FIG.14 FIG.14a

FIG.13

FIG.18

FIG.15

FIG.16

FIG.17

FIG.19

FIG.20

FIG.21

FIG.22

FIG 23

FIG 24

FIG 25

FIG.26

FIG.27

FIG.28

FIG.29

FIG.30

FIG.31

FIG.32

FIG.33

EP 0 335 051 A2

FIG.34

FIG.35